# EUROPEAN PATENT APPLICATION

(11) **EP 3 712 886 A1**
(43) Date of publication of application: **23.09.2020**
(21) Application number: 18879730.2
(22) Date of filing: 06.11.2018
(51) Int. Cl.: G10L 15/26, G10L 15/06, G10L 15/14

(54) **AUTOMATIC SPEECH RECOGNITION DEVICE AND METHOD**

(30) Priority: 14.11.2017 KR 20170151871
(71) Applicant: Llsollu Co., Ltd., Seoul 06775 (KR)
(72) Inventor: HWANG, Myeongjin, Seoul 06307 (KR); JI, Changjin, Seoul 06994 (KR)
(74) Representative: Peters, Sebastian Martinus
(86) International application number: PCT/KR2018/013412
(87) International publication number: WO 2019/098589

(57) **Abstract**

An automatic speech recognition device, according to the present invention, comprises: a memory for storing a program for converting speech data received via an interface module into transcription data, and outputting same; and a processor for executing the program stored in the memory, wherein, by executing the program, the processor converts the received speech data into pronunciation code data on the basis of a pre-trained first model, and converts the converted pronunciation code data into transcription data on the basis of a pre-trained second model.

## Description

### [Technical Field]

The present invention relates to an automatic speech recognition device and method, and more particularly, to an automatic speech recognition device and method for extracting undistorted speech features.

### [Background Art]

Automatic speech recognition (speech to text: STT) is a computational technique that automatically converts raw speech data into a character corresponding to the raw speech data. The demand for speech data analysis is gradually increasing in various fields such as broadcasting, telephone consultation, transcription, interpretation, big data analysis, and the like.

Such automatic speech recognition may substantially include extracting features from speech by using an acoustic model to symbolize the extracted features, and selecting an appropriate candidate matched to the context from several candidates symbolized by using a language model.

Meanwhile, because it is impossible to directly extract necessary information when original data are voice, although the process of converting into a character sequence is essential, when such a process is performed manually, a lot of time and cost are required. To solve this problem, the demand for high-speed and accurate automatic speech recognition has been increased.

In order to make a high-quality speech recognizer usable, it is necessary to construct speech data and character sequence data corresponding thereto, that is, large parallel data composed of voice-character sequences.

In addition, since the actual pronunciation and the notation are often different, it is required to construct a program that can add related information or pronunciation-notation conversion rule data.

Accordingly, for major languages at home and abroad, several companies have already secured speech-character sequence parallel data and pronunciation-notation conversion rule data, and have secured the quality of speech recognition at a certain level or above.

However, the problem of incompleteness of the speech-character sequence parallel data or the pronunciation-notation conversion rule data and the problem of data distortion due to various ambiguities caused by the pronunciation-notation conversion rule data deteriorate the quality of speech recognition.

In addition, in the case of developing a recognizer for a new language, a lot of financial and time costs are incurred in the process of constructing the speech-character sequence parallel data and pronunciation-notation conversion rule data, and it is not easy to obtain quality data.

### [Disclosure]

### [Technical Problem]

An object of the present invention is to provide an automatic speech recognition device and method which can prevent information distortion caused by learning data for speech recognition, secure high-quality performance with low-cost data, and utilize an already-developed speech recognizer to construct a speech recognizer for a third language at a minimum cost.

However, technical objects to be achieved by the present invention are not limited to the technical object described above, and other technical objects may exist.

### [Technical Solution]

Representative configurations of the present invention for achieving the above objects are as follows.

According to an aspect of the present invention, there is provided an automatic speech recognition device includes a memory configured to store a program for converting speech data received through an interface module into transcription data and outputting the transcription data; and a processor configured to execute the program stored in the memory. In this case, by executing the program, the processor converts the received speech data into pronunciation code data based on a pre-trained first model, and converts the pronunciation code data into transcription data based on a pre-trained second model.

The pre-trained first model may include a speech-pronunciation code conversion model and the speech-pronunciation code conversion model may be trained based on parallel data composed of the speech data and the pronunciation code data.

The converted pronunciation code data may include a feature value sequence of a phoneme or sound having a length of 1 or more that is expressible in a one-dimensional structure.

The converted pronunciation code data may include a language-independent value.

The pre-trained second model may include a pronunciation code-transcription conversion model, and the pronunciation code-transcription conversion model may be trained based on parallel data composed of the pronunciation code data and the transcription data.

The pre-trained second model may include a pronunciation code-transcription conversion model, and the second model may convert a sequence type pronunciation code into a sequence type transcription at a time.

The pre-trained first model may include a speech-pronunciation code conversion model and the speech-pronunciation code conversion model may be generated by performing unsupervised learning based on previously prepared speech data.

The previously prepared speech data may be constructed as parallel data together with the transcription data

The pre-trained second model may include a pronunciation code-transcription conversion model, the processor may be configured to convert the speech data into the pronunciation code data to correspond to the speech data included in the parallel data based on a pre-trained speech-pronunciation code conversion model, and the pre-trained speech-pronunciation code conversion model may be trained based on parallel data including the pronunciation code data converted corresponding to the speech data by the processor and the transcription data.

The processor may generate a candidate sequence of characters from the converted pronunciation code data by using pre-prepared syllable-pronunciation dictionary data, and convert the candidate string of characters generated through the second model, which is a language model trained based on corpus data, into the transcription data.

According to another aspect of the present invention, there is provided an automatic speech recognition method which includes receiving speech data; converting the received speech data into a pronunciation code sequence based on a pre-trained first model; and converting the converted pronunciation code sequence into transcription data based on a pre-trained second model.

### [Advantageous Effects]

According to the embodiments of the present invention, it is possible to prevent information distortion caused by learning data for speech recognition.

In addition, when constructing an automatic speech recognition device, financial and temporal costs can be reduced, and the result of a high-quality automatic speech recognition device can be secured in terms of accuracy.

### [Description of Drawings]

FIG. 1 is a block diagram of an automatic speech recognition device 100 according to the present invention.
FIG. 2 is a flowchart illustrating an automatic speech recognition method in the automatic speech recognition device 100 according to the present invention
FIG. 3 is a flowchart illustrating an automatic speech recognition method according to the first embodiment of the present invention.
FIG. 4 is a flowchart illustrating an automatic speech recognition method according to the second embodiment of the present invention.
FIG. 5 is a flowchart of an automatic speech recognition method according to a third embodiment of the present invention.
FIG. 6 is a flowchart illustrating an automatic speech recognition method according to a fourth embodiment of the present invention.

### [Description of Reference Numeral]

- 100:: Automatic speech recognition device
- 110:: Memory
- 120:: Processor
- 130:: Interface module
- 131:: Microphone
- 133:: Display unit
- 140:: Communication module

### [Best Mode]

### [Mode for Invention]

Hereinafter, various embodiments of the present invention will be described in detail with reference to the accompanying drawings, so that those skilled in the art can easily carry out the present invention. However, the present disclosure is not limited to the embodiments set forth herein and may be modified variously in many different forms. In the drawings, the portions irrelevant to the description will not be shown in order to make the present disclosure clear.

In addition, all over the specification, when some part 'includes' some elements, unless explicitly described to the contrary, it means that other elements may be further included but not excluded.

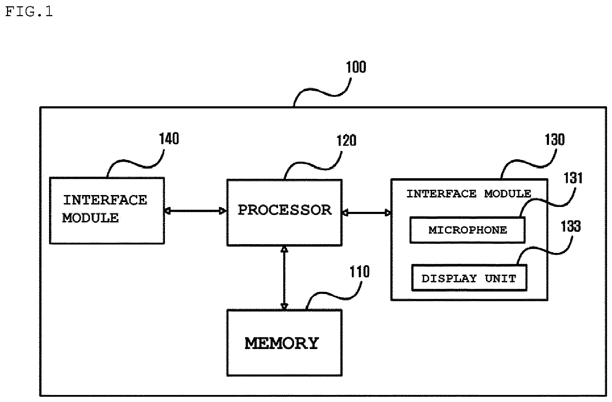

FIG. 1 is a block diagram of an automatic speech recognition device 100 according to the present invention.

The automatic speech recognition device 100 according to the present invention includes a memory 110 and a processor 120.

The memory 110 stores a program for automatically recognizing a speech, that is, a program for converting speech data into transcription data to output the transcription data. In this case, the memory 110 refers to a non-volatile storage device and a volatile storage device that keep stored information even when power is not supplied.

For example, the memory 110 may include a NAND flash memory such as a compact flash (CF) card, a secure digital (SD) card, a memory stick, a solid-state drive (SSD), a micro SD card, and the like, a magnetic computer storage device such as a hard disk drive (HDD), and an optical disc drive such as CD-ROM, DVD-ROM, and the like.

The processor 120 executes the program stored in the memory 110. As the processor 120 executes the program, the transcription data are generated from the input speech data.

Meanwhile, the automatic speech recognition device may further include an interface module 130 and a communication module 140.

The interface module 130 includes a microphone 131 for receiving the speech data of a user and a display unit 133 for outputting the transcription data into which the speech data are converted.

The communication module 140 transmits and/or receives data such as speech data and transcription data to and/or from a user terminal such as a smartphone, a tablet PC, a laptop computer, and the like. The communication module may include a wired communication module and a wireless communication module. The wired communication module may be implemented with a power line communication device, a phone line communication device, a cable home (MoCA), Ethernet, IEEE1294, an integrated wired home network, and an RS-485 control device. In addition, the wireless communication module may be implemented with wireless LAN (WLAN), Bluetooth, HDR WPAN, UWB, ZigBee, Impulse Radio, 60GHz WPAN, Binary-CDMA, wireless USB technology, wireless HDMI technology, and the like.

Meanwhile, the automatic speech recognition device according to the present invention may be formed separately from the user terminal described above, but is not limited thereto. That is, the program stored in the memory 110 of the automatic speech recognition device 100 may be included in the memory of the user terminal and implemented in the form of an application.

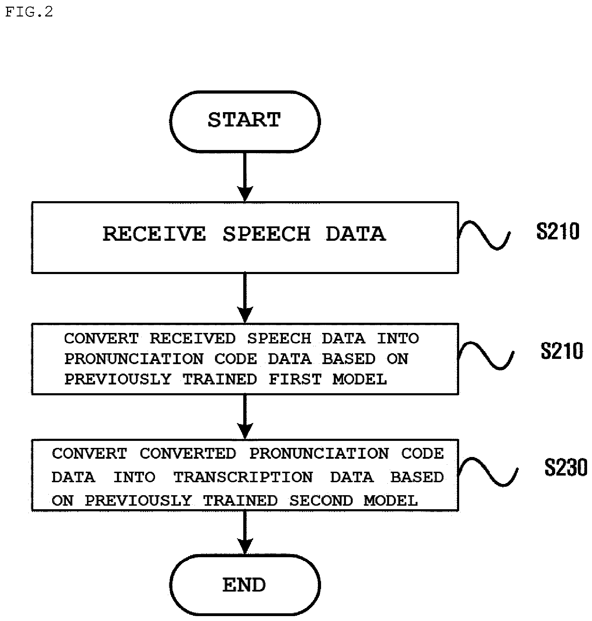

Hereinafter, each operation performed by the processor 120 of the automatic speech recognition device 100 according to the present invention will be described in more detail with reference to FIGS. 2 to 6.

For reference, the components shown in FIG. 1 according to an embodiment of the present invention may be implemented in software or in hardware such as a field programmable gate array (FPGA) or an application specific integrated circuit (ASIC), and perform predetermined functions.

However, 'components' are not limited to software or hardware, and each component may be configured to be in an addressable storage medium or may be configured to reproduce one or more processors.

Thus, as an example, a component includes components such as software components, object-oriented software components, class components, and task components, processes, functions, attributes, procedures, subroutines, segments of program code, drivers, firmware, microcode, circuitry, data, database, data structures, tables, arrays, and variables.

Components and functions provided within corresponding components may be combined into a smaller number of components or further separated into additional components.

FIG. 2 is a flowchart illustrating an automatic speech recognition method in the automatic speech recognition device100 according to the present invention.

In the automatic speech recognition method according to the present invention, when speech data are first received through the microphone 131 in operation S210, the processor 120 converts the received speech data into pronunciation code data based on a previously trained first model in operation S220.

Next, the processor 120 converts the converted pronunciation code data into transcription data based on a previously trained second model in operation S230.

The converted transcription data may be transmitted to the user terminal through the communication module 140 or output through the display unit 133 of the automatic speech recognition device 100 itself.

The automatic speech recognition method trains the first and second models through the model training operation using pre-prepared data, and converts the received speech data into the transcription data through a decoding operation using the trained first and second models.

Hereinafter, the first to fourth embodiments of the automatic speech recognition method according to the present invention will be described in more detail based on each specific case for pre-prepared data and the first and second models.

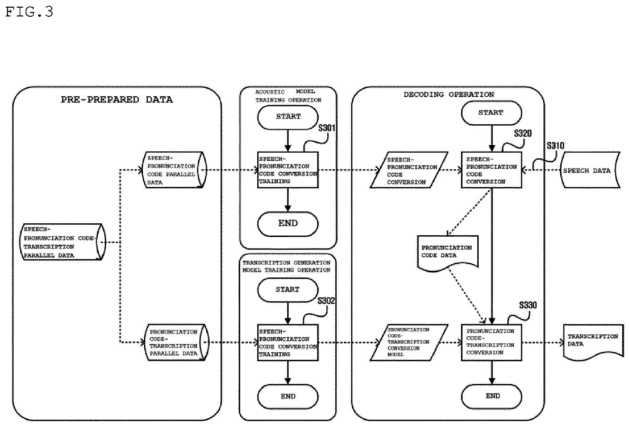

FIG. 3 is a flowchart illustrating an automatic speech recognition method according to the first embodiment of the present invention.

The automatic speech recognition method according to the first embodiment of the present invention may use parallel data composed of speech data, pronunciation code data, and transcription data as prepared data.

In operation S301, a speech-pronouncement code conversion model, which is a first model, may be trained based on the parallel data composed of the speech data and the pronunciation code data among the parallel data.

In this case, in the first embodiment of the present invention, the training method of the first model may use a speech-phoneme training part in normal speech recognition.

In this case, the pronunciation code of the parallel data composed of the speech data and the pronunciation code data should be expressed as a value that can represent the sound as much as possible without expressing the heteromorphism of the speech according to notation or the like. This may reduce the ambiguity in symbolizing speech, thereby minimizing distortion during training and decoding. In addition, the related pronunciation change and inverse transformation algorithms (e.g., Womul an-> Woomuran, Woomran->Womul an) are not required, and there is no need to consider how to deal with the destruction (e.g., Ye peun anmoo -> Ye peu nan moo Ye peu_nan moo?) of word boundaries due to word-to-word prolonged sound.

In addition, in this case, the converted pronunciation code data may be composed of a feature value sequence of phonemes or sounds having a length of one or more that can be expressed in a one-dimensional structure without learning in word units. This has the advantage that there is no misrecognition (e.g., distortion: Ran -> Ran?Nan?An?)caused by analogizing a word in the insufficient context without the need for a complex data structure (graph) required in converting into words at the time point of speech-to-speech conversion (decoding).

Meanwhile, the pronunciation code data may include values representing tonality, intonation, and rest, in addition to pronunciation.

In addition, the form of the pronunciation code may be a phonetic symbol in the form of a letter, a bundle of values consisting of one or more numbers, or a combination of one or more values in which numbers and letters are mixed.

In the first embodiment of the present invention, the pronunciation code-transcription conversion model, which is the second model, may be trained based on the parallel data composed of the pronunciation code data and the transcription data among the parallel data in operation S302.

In this case, as a method of training the second model, the second model may be trained by applying a conventional learning method such as HMM as well as DNN such as CNNs and RNNs capable of learning in a sequence-to-sequence form.

As described above, once the speech-pronouncement code conversion model and the pronunciation code-transcription conversion model, which are the first and second models, are trained, the automatic speech recognition method according to the first embodiment of the present invention receives the speech data from the microphone 131 of the interface module 130 or the user terminal in operation S310, and converts the received speech data into the pronunciation code data by using the speech-pronunciation code conversion model in operation S320.

After the speech data is converted into pronunciation code data, in operation S330, the converted pronunciation code data are converted into transcription data by using the pronunciation code-transcription conversion model, and the converted transcription data are output through the display unit 133 or provided to the user terminal.

The automatic speech recognition method according to the first embodiment may be configured in an end-to-end DNN structure of two stages because two training operations including an acoustic model training operation of training the speech-pronouncement code conversion model and atranscription generation model of training the pronunciation code-transcription conversion model has a sequence-to-sequence convertible structure.

The main difference between a conventional speech recognition system and the first embodiment is that the output of the speech model (i.e., the speech-to-speech code conversion model) is a language independent phoneme.

The phonemes that humans can speak are limited. Therefore, it is possible to universally design the pronunciation code without being dependent on a specific language. This means that even those who do not know the corresponding language may transcribe with pronunciation codes. This also means that other language data may be used when training a speech model for a specific language. Therefore, unlike the related art, the first embodiment of the present invention may learn a language-independent (universal) acoustic model using some language data already secured.

In addition, because the output of the acoustic model of the first embodiment is an unambiguous and highly accurate (non-distorted) phoneme information sequence, it is possible to provide an unpolluted input a sequence-to-sequence model that is to a subsequent process. It is possible to solve problems in sequence-to-sequence by the recent development of a high-quality technique based on DNN. In particular, because it is possible to solve the problems in the pronunciation code-transcription conversion by bringing contextual information within a few words rather than the entire sentence like automatic translation, the accuracy and speed are not matters.

In addition, by applying the deep learning in the form of sequence-to-sequence in the transcription conversion process of the first embodiment, the range of use of context information may be easily adjusted in the learning process. In addition, there is an advantage that the size of the model does not increase exponentially compared to aconventional language model. Therefore, by appropriately applying the range of use of context information, it is possible to generate a natural sentence by minimizing the appearance of words that do not match context in the speech recognition process.

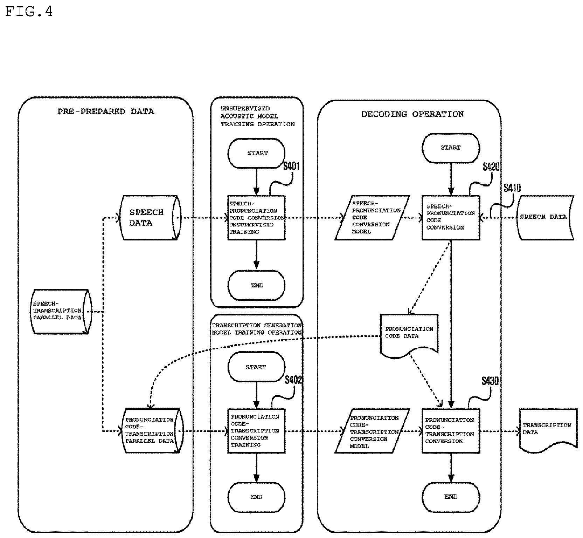

FIG. 4 is a flowchart illustrating an automatic speech recognition method according to the second embodiment of the present invention.

The automatic speech recognition method according to the second embodiment of the present invention is different from the first embodiment in that it uses parallel data composed of only speech data and transcription data as dictionary data.

In detail, according to the second embodiment, unsupervised learning may be performed with respect to a speech-pronunciation code conversion model, which is the first model, by using only speech data among the parallel data in operation S401.

In this case, the reason why it is effective to use unsupervised learning using only speech data is that the learning target is a small number of limited pronunciation codes (human-pronounceable pronunciations are limited), and learning is performed in the form of the same pronunciation-same code.

Such an unsupervised learning method may include a conventional method such as clustering technique, reinforcement learning, and the like. For example, in the clustering technique, the feature values extracted from a specific speech section are compared with the feature values extracted from another section or the median value of other clusters, and the process of determining the mathematically closest clusters as the same cluster is repeated until the number of clusters is within a certain number. In addition, reinforcement learning may be performed by setting the output (classification code) to an arbitrary number and then supervises the direction in which the classification result of the feature values extracted from a specific speech section is less ambiguous (larger in clarity). Meanwhile, in operation S402, the pronunciation code-transcription conversion model, which is the second model according to the second embodiment of the present invention, may perform learning in the same manner as in the first embodiment by using the parallel data composed of the pronunciation code data and the transcription data.

In this case, the parallel data composed of the pronunciation code data and the transcription data are obtained by automatically converting the speech-transcription parallel data into the speech-pronouncement code-transcription parallel data. In this case, it is possible to perform automatic conversion by automatically generating a pronunciation code from speech by using a speech-to-pronunciation code conversion model.

As described above, once the speech-pronouncement code conversion model and the pronunciation code-transcription conversion model, which are the first and second models, are trained, the automatic speech recognition method according to the second embodiment of the present invention receives the speech data in operation S410, and converts the received speech data into the pronunciation code data by using the speech-pronunciation code conversion model in operation S420.

Next, in operation S430, the converted pronunciation code data is converted to the transcription data by using the pronunciation code-transcription conversion model.

•The automatic speech recognition method according to the second embodiment may be configured in an end-to-end DNN structure of two stages because each of two training operations including an unsupervised acoustic model training operation and a transcription generation model training operation has a sequence-to-sequence convertible structure.

As described above, the second embodiment of the present invention is characterized in that unsupervised acoustic model training is introduced so that speech-pronunciation code parallel data does not need to be prepared in advance.

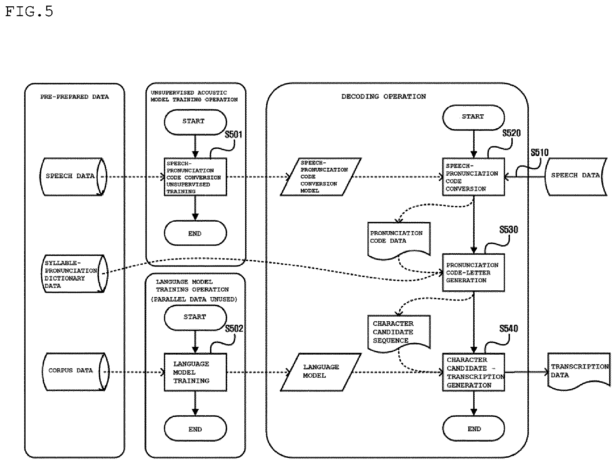

FIG. 5 is a flowchart of an automatic speech recognition method according to a third embodiment of the present invention.

An automatic speech recognition method according to the third embodiment of the present invention may require speech data, syllable-pronunciation dictionary data, and corpus data as dictionary data, and each of them may be independently configured without being configured as parallel data.

In the third embodiment, similar to the second embodiment, the speech-pronunciation code conversion model, which is the first model, may be trained by using only speech data without supervision in operation 501.

Next, in operation S502, a language model, which is the second model, is generated through learning based on corpus data prepared in advance. In this case, the corpus data does not have to be a parallel corpus, and the language model refers to a model capable of generating a sentence by tracking in units of letters. As described above, once the speech-pronouncement code conversion model and the language model, which are the first and second models, are trained, the automatic speech recognition method according to the third embodiment of the present invention receives the speech data in operation S510, and converts the received speech data into the pronunciation code data by using the speech-pronunciation code conversion model in operation S520.

Next, in operation S530, a candidate sequence of letters (syllables) that can be written is generated by using the syllable-pronunciation data prepared in advance.

Next, in operation S540, through the language model trained based on the corpus data, the generated character candidate sequence is converted into the transcription data.

In this case, the automatic speech recognition method according to the third embodiment of the present invention may further include a word generation step between the pronunciation code-letter generation operation S530 and the letter candidate-transcription generation operation S540. In this case, a word dictionary may be used additionally.

Meanwhile, in the automatic speech recognition method according to the third embodiment of the present invention, knowledge for converting pronunciation code data into pronunciation may be constructed manually, semi-automatically or automatically.

For example, in the case of automatically constructing the knowledge of converting the pronunciation code into pronunciation, based on the large-volume speech-transcription parallel data, the pronunciation code is generated through the pre-constructed speech-pronunciation code conversion model, and it is possible to find a syllable-pronunciation pair by repeating the process of mathematically finding similarity in distribution statistics by comparing a piece of the generated pronunciation code sequence with a specific syllable of the transcription corresponding to a parallel corpus.

Alternatively, the syllable-pronunciation pair may be found by applying the byte pair encoding to the pronunciation code sequence and the corpus identically.

By which method, there may be errors, but increasing the target corpus reduces the error, and even if the error is implied, it has a lower probability, so the effect on the result is lowered.

In the case of the automatic speech recognition method according to the third embodiment of the present invention, it is possible to perform complete unsupervised learning through five operations of an unsupervised acoustic model training operation, a speech-to-pronunciation code conversion operation, a language model training operation, a pronunciation code-letter generation operation, and a letter candidate-transcription generation operation.

However, in this case, the syllable-pronunciation dictionary should be constructed separately. Although parallel corpus is required to automatically construct a syllable-pronunciation dictionary, the syllable-pronunciation dictionary may also be constructed manually without parallel corpus. In addition, because of a syllable dictionary, its size is not as large as the word dictionary, but is limited.

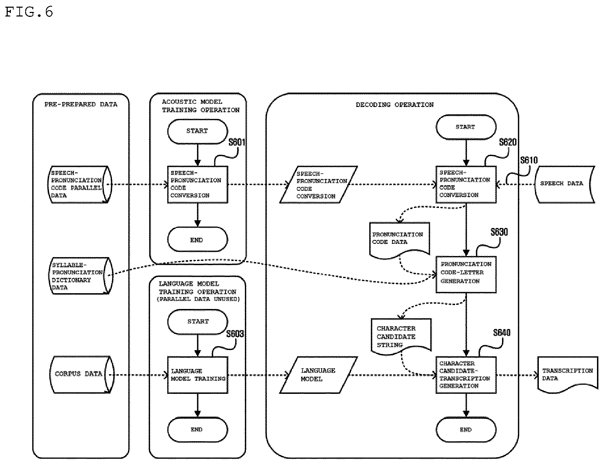

FIG. 6 is a flowchart illustrating an automatic speech recognition method according to a fourth embodiment of the present invention.

The automatic speech recognition method according to the fourth embodiment of the present invention is different from the third embodiment in that it requires syllable-pronunciation data and corpus data as dictionary data, and parallel data composed of speech data and pronunciation code data.

In detail, according to the fourth embodiment, in operation S601, a speech-pronouncement code conversion model, which is the first model, may be trained based on the parallel data composed of the speech data and pronunciation code data.

Next, as in the third embodiment, in operation S602, a language model, which is the second model, is trained and generated based on the corpus data prepared in advance.

As described above, once the speech-pronouncement code conversion model and the language model, which are the first and second models, are trained, the automatic speech recognition method according to the fourth embodiment of the present invention receives the speech data in operation S610, and converts the received speech data into the pronunciation code data by using the speech-pronunciation code conversion model in operation S620.

Next, in operation S630, a candidate sequence of letters that can be written is generated by using the syllable-pronunciation data prepared in advance.

Next, in operation S640, through the language model trained based on the corpus data, the generated character candidate sequence is converted into the transcription data.

In the above description, operations S210 to S640 may be further divided into additional operations or combined into fewer operations according to an embodiment of the present invention. In addition, some operations may be omitted if necessary, and the order between the operations may be changed. In addition, even if omitted, the contents already described with respect to the automatic speech recognition apparatus 100 of FIG. 1 are also applied to the automatic speech recognition methods of FIGS. 2 to 6.

Meanwhile, the automatic speech recognition methods according to the first to fourth embodiments have a one-to-one relationship without ambiguity between pronunciation and pronunciation codes. Therefore, it is not necessarily limited to a specific language, and it has a merit that there is no phenomenon in which the pronunciation law is changed and the substitution relationship between pronunciation and symbols is changed as the language changes.

Accordingly, the speech-to-speech code conversion model of the present invention may be used identically without re-learning in all languages.

In addition, due to the above characteristics, the automatic speech recognition method according to the present invention has an advantage there is no need to limit speech data required in a speech-to-pronunciation code conversion training process to a specific language.

In addition, according to the present invention, the acoustic model may be unsupervisedly trained as in the second and third embodiments or may be constructed semi-automatically at a low cost as in the first and fourth embodiments, thereby improving the acoustic model recognition performance through the low-cost and large-capacity learning.

The automatic speech recognition method in the automatic speech recognition apparatus 100 according to an embodiment of the present invention may be implemented in the form of a recording medium including instructions executable by a computer such as a program module executed by a computer. Computer readable media may be any available media that can be accessed by a computer and include both volatile and nonvolatile media, both removable and nonremovable media. The computer-readable medium may also include both computer storage media and communication media. Computer storage media includes both volatile and nonvolatile, removable and non-removable media implemented in any method or technology for storage of information such as computer readable instructions, data structures, program modules or other data. Communication media typically comprise any information delivery media, including computer readable instructions, data structures, program modules, or other data in a modulated data signal, such as a carrier wave, or other transport mechanism

Although the methods and systems of the present invention have been described in connection with specific embodiments, some or all of their components or operations may be implemented using a computer system having a general purpose hardware architecture.

The above description of the exemplary embodiments is provided for the purpose of illustration, and it would be understood by those skilled in the art that various changes and modifications may be made without changing technical conception and essential features of the exemplary embodiments. Thus, it is clear that the above-described example embodiments are illustrative in all aspects and do not limit the present disclosure. For example, each component described to be of a single type can be implemented in a distributed manner. Likewise, components described to be distributed can be implemented in a combined manner.

The scope of the present invention is indicated by the following claims rather than the above detailed description, and it should be interpreted that all changes or modified forms derived from the meaning and scope of the claims and equivalent concepts thereof are included in the scope of the present invention.

### Industrial Applicability

The present invention may be applied to various speech recognition technology fields, and provide an automatic speech recognition device and method. Due to such features, it is possible to prevent information distortion caused by learning data for speech recognition.

## Claims

1. An automatic speech recognition device comprising:
a memory configured to store a program for converting speech data received through an interface module into transcription data and outputting the transcription data; and
a processor configured to execute the program stored in the memory,
wherein, by executing the program, the processor converts the received speech data into pronunciation code data based on a pre-trained first model, and converts the pronunciation code data into transcription data based on a pre-trained second model.

2. The automatic speech recognition device of claim 1, wherein the pre-trained first model includes a speech-pronunciation code conversion model and the speech-pronunciation code conversion model is trained based on parallel data composed of the speech data and the pronunciation code data.

3. The automatic speech recognition device of claim 2, wherein the converted pronunciation code data includes a feature value sequence of a phoneme or sound having a length of 1 or more that is expressible in a one-dimensional structure.

4. The automatic speech recognition device of claim 2,wherein the converted pronunciation code data includes a language-independent value.

5. The automatic speech recognition device of claim 1,wherein the pre-trained second model includes a pronunciation code-transcription conversion model, and the pronunciation code-transcription conversion model is trained based on parallel data composed of the pronunciation code data and the transcription data.

6. The automatic speech recognition device of claim 1,wherein the pre-trained second model includes a pronunciation code-transcription conversion model, and the second model converts a sequence type pronunciation code into a sequence type transcription at a time.

7. The automatic speech recognition device of claim 1,wherein the pre-trained first model includes a speech-pronunciation code conversion model and the speech-pronunciation code conversion model is generated by performing unsupervised learning based on previously prepared speech data.

8. The automatic speech recognition device of claim 7, wherein the previously prepared speech data is constructed as parallel data together with the transcription data.

9. The automatic speech recognition device of claim 8, wherein the pre-trained second model includes a pronunciation code-transcription conversion model, the processor is configured to convert the speech data into the pronunciation code data to correspond to the speech data included in the parallel data based on a pre-trained speech-pronunciation code conversion model, and the pre-trained speech-pronunciation code conversion model is trained based on parallel data including the pronunciation code data converted corresponding to the speech data by the processor and the transcription data.

10. The automatic speech recognition device of claim 2 or 7,wherein the processor generates a candidate sequence of characters from the converted pronunciation code data by using pre-prepared syllable-pronunciation dictionary data, and converts the candidate string of characters generated through the second model, which is a language model trained based on corpus data, into the transcription data.

11. An automatic speech recognition method comprising:
receiving speech data;
converting the received speech data into a pronunciation code sequence based on a pre-trained first model; and
converting the converted pronunciation code sequence into transcription data based on a pre-trained second model.
